# NEUE EUROPÄISCHE PATENTSCHRIFT

(11) **EP 3 240 961 B2**
(45) Veröffentlichungstag und Bekanntmachung des Hinweises auf die Entscheidung über den Einspruch: **17.04.2024**
(45) Hinweis auf die Patenterteilung: 20.02.2019
(21) Anmeldenummer: 15804320.8
(22) Anmeldetag: 03.12.2015
(51) Int. Cl.: B60K 6/52, B60W 60/00

(54) **SCHEIBENBREMSE**
DISC BRAKE
FREIN À DISQUE

(30) Priorität: 29.12.2014 DE 102014019618
(43) Veröffentlichungstag der Anmeldung: 08.11.2017
(73) Patentinhaber: ZF CV Systems Europe BV, 1170 Brussels (BE)
(72) Erfinder: HENNING, Paul, 68723 Schwetzingen (DE); JUNGMANN, Hans-Christian, 69517 Gorxheimertal (DE)
(74) Vertreter: Eisenführ Speiser
(86) Internationale Anmeldenummer: PCT/EP2015/002436
(87) Internationale Veröffentlichungsnummer: WO 2016/107665

(56) Entgegenhaltungen:
- EP-A1- 1 441 141
- EP-A1- 1 672 239
- EP-A2- 2 050 980
- EP-B1- 0 248 385
- EP-B1- 0 248 385
- WO-A1-2014/041157
- WO-A1-2015/136045
- DE-A1-102007 049 979
- DE-A1-102012 006 092

## Beschreibung

Die Erfindung betrifft eine Scheibenbremse, insbesondere für Nutzfahrzeuge, mit einem Bremsbelag, einer Niederhaltefeder und einem Niederhaltebügel, wobei der Niederhaltebügel die Niederhaltefeder nach radial innen bezüglich einer Drehachse der Bremse gegen den Bremsbelag vorspannt.

Scheibenbremsen der eingangs genannten Art sind bekannt, beispielsweise aus der EP 248 385 B1. Bei derartigen Scheibenbremsen dient die Niederhaltefeder dazu, den Bremsbelag in einem an dem Bremsenträger oder dem Bremssattel der Scheibenbremse ausgebildeten Schacht zu halten, in den der Bremsbelag von radial außen her eingesetzt wird. Der Bremsbelag kann sich daher gegen die Vorspannkraft der Niederhaltefeder nach radial außen bewegen. Unter "radial" wird dabei nicht unbedingt die mathematisch genaue Radialrichtung verstanden. Vielmehr ist mit radial diejenige Richtung gemeint, in der sich der Bremsbelag gegen die Vorspannkraft der Niederhaltefeder "nach außen" bewegen kann. WO 2014041157 A1 betrifft eine Anordnung eines Belaghaltebügels am Bremssattel einer Scheibenbremse. WO 2015123045 A1 zeigt eine Scheibenbremse mit Belaghaltebügel und Sicherungsvorrichtung. EP 1672239 A1 betrifft eine Niederhaltefeder für Druckplatten von Bremsbelägen. DE 1020070499979 A1 und EP 2050980 A2 zeigen eine Scheibenbremse gemäß dem Oberbegriff von Anspruch 1.

Derartige Bewegungen des Bremsbelages in Radialrichtung bzw. "nach außen" sind insbesondere bei Schlechtwegstrecken zu beobachten. Bei den bekannten Scheibenbremsen schlägt der Bremsbelag bei Überschreiten eines bestimmten Maßes der Radialbewegung nach außen an der Niederhaltefeder an. Die Niederhaltefeder wird dadurch zwischen dem Bremsbelag und dem Niederhaltebügel eingeklemmt. Dieses Einklemmen, das unter Umständen mit erheblichen Klemmkräften einhergeht und das insbesondere bei Schlechtwegstrecken sehr häufig vorkommen kann, schädigt die Niederhaltefeder, wodurch ihre Lebensdauer verringert wird.

Der Erfindung liegt die Aufgabe zugrunde, die Niederhaltefeder vor den oben beschriebenen Beeinträchtigungen zu schützen und dadurch ihre Lebensdauer zu verlängern.

Erfindungsgemäß wird die gestellte Aufgabe durch eine Scheibenbremse nach Anspruch 1 gelöst, wobei der kleinste Radialabstand der Niederhaltefeder von dem Bremsbelag in demjenigen Bereich, in dem der Niederhaltebügel die Niederhaltefeder in Radialrichtung überdeckt, größer ist als der kleinste Radialabstand des Niederhaltebügels von dem Bremsbelag in demjenigen Bereich, in dem der Niederhaltebügel den Bremsbelag in Radialrichtung überdeckt.

Durch die obige Ausgestaltung ist sichergestellt, daß der Bremsbelag dann, wenn er sich in Radialrichtung über ein vorbestimmtes Maß nach außen bewegt, an dem Niederhaltebügel anschlägt und dadurch an einer Weiterbewegung gehindert wird, bevor er die Niederhaltefeder erreicht. Da mithin der Bremsbelag in keinem Betriebszustand die Niederhaltefeder in demjenigen Bereich berühren kann, in dem der Niederhaltebügel die Niederhaltefeder in Radialrichtung überdeckt, kann die Niederhaltefeder auch nicht zwischen dem Niederhaltebügel und dem Bremsbelag eingeklemmt werden. Die aus dem Einklemmen resultierenden Beeinträchtigungen der Niederhaltefeder sind also vermieden.

Mit anderen Worten lehrt die Erfindung, die Radialbewegung des Bremsbelags durch Anschlag an den Niederhaltebügel zu stoppen, bevor der Bremsbelag an einer Stelle an der Niederhaltefeder anschlagen kann, die dem Niederhaltebügel in Radialrichtung gegenüberliegt.

Wenn oben von einem Bereich die Rede ist, in dem der Niederhaltebügel die Niederhaltefeder in Radialrichtung überdeckt, so muß es sich dabei nicht um einen einzelnen zusammenhängenden Bereich handeln. Beispielsweise ist die Erfindung auch auf Niederhaltebügel anwendbar, die zwei sich in Axialrichtung erstreckende Speichen haben, weshalb auch zwei Bereiche ausgebildet sind, in denen der Niederhaltebügel die Niederhaltefeder in Radialrichtung überdeckt. Wichtig ist nur, daß der Bremsbelag in einem solchen Bereich nicht von radial innen an die Niederhaltefeder gelangen kann.

Prinzipiell können die obigen Radialabstände beliebig sein, sofern die erläuterten Verhältnisse eingehalten sind. Erfindungsgemäß bevorzugt ist aber vorgesehen, daß der kleinste Radialabstand der Niederhaltefeder von dem Bremsbelag in demjenigen Bereich, in dem der Niederhaltebügel die Niederhaltefeder in Radialrichtung überdeckt, im Bereich von 1,5 bis 4 mm liegt, weiter bevorzugt 2 bis 3 mm.

Ebenfalls erfindungsgemäß bevorzugt liegt der kleinste Radialabstand des Niederhaltebügels von dem Bremsbelag in demjenigen Bereich, in dem der Niederhaltebügel den Bremsbelag in Radialrichtung überdeckt, in dem Bereich von 1 bis 3,5 mm, weiter bevorzugt 1,5 bis 2,5 mm.

Nach einer weiter bevorzugten Ausführungsform der Erfindung ist vorgesehen, daß im Ruhezustand der Bremse die Differenz zwischen dem kleinsten Radialabstand der Niederhaltefeder von dem Bremsbelag in demjenigen Bereich, in dem der Niederhaltebügel die Niederhaltefeder in Radialrichtung überdeckt, und dem kleinsten Radialabstand des Niederhaltebügels von dem Bremsbelag in demjenigen Bereich, in dem der Niederhaltebügel den Bremsbelag in Radialrichtung überdeckt, im Bereich von 0,5 bis 2 mm liegt, weiter bevorzugt 1 bis 1,5 mm.

Es ist ein Ansatz vorgesehen, dessen radiale Begrenzung den kleinsten Radialabstand des Niederhaltebügels von dem Bremsbelag in demjenigen Bereich bestimmt, in dem der Niederhaltebügel den Bremsbelag in Radialrichtung überdeckt.

Mit anderen Worten ist nach dieser Ausgestaltung der Erfindung ein besonderer Anschlag vorgesehen, um sicherzustellen, daß der Bremsbelag bei Bewegung nach radial außen an dem Niederhaltebügel anschlägt, bevor er die Niederhaltefeder erreicht.

Der Ansatz erstreckt sich durch eine Durchgangsöffnung in der Niederhaltefeder und kann damit gleichzeitig dazu dienen, die Niederhaltefeder in mindestens einer Axialrichtung abzustützen.

Nach einer weiter bevorzugten Ausführungsform der Erfindung ist der Ansatz an dem Bremsbelag ausgebildet.

Dabei kann erfindungsgemäß weiter bevorzugt vorgesehen sein, daß der Ansatz die Niederhaltefeder übergreift. Dadurch dient der Ansatz gleichzeitig auch dazu, die Niederhaltefeder in Radialrichtung gegen ein Abheben von dem Bremsbelag über ein vorbestimmtes Maß hinaus oder überhaupt zu hindern.

Schließlich kann es erfindungsgemäß vorgesehen sein, daß der Ansatz an dem Niederhaltebügel ausgebildet ist.

Im Folgenden ist die Erfindung anhand von bevorzugten Ausführungsbeispielen unter Bezugnahme auf die beiliegende Zeichnung mit weiteren Einzelheiten näher erläutert. Dabei zeigen
Figur 1. eine schematische perspektivische Ansicht eines ersten Ausführungsbeispiels,
Figur 2 eine Axialansicht des Ausführungsbeispiels nach Figur 1 im Ruhezustand,
Figur 3 eine vergrößerte Teilschnittansicht entlang der Linie A-A in Figur 2,
Figur 4 die gleiche Ansicht wie Figur 2, jedoch in ausgelenktem Zustand,
Figur 5 eine vergrößerte Teilschnittansicht entlang der Linie A-A in Figur 4,
Figur 6 die gleiche Ansicht wie Figur 1, jedoch von einem erfindungsgemäßen zweiten Ausführungsbeispiel,
Figur 7 die gleiche Ansicht wie Figur 2, jedoch von dem erfindungsgemäßen zweiten Ausführungsbeispiel,
Figur 8 eine vergrößerte Teilschnittansicht entlang der Linie B-B in Figur 7 und
Figur 9 die gleiche Ansicht wie Figur 8, jedoch in ausgelenktem Zustand.

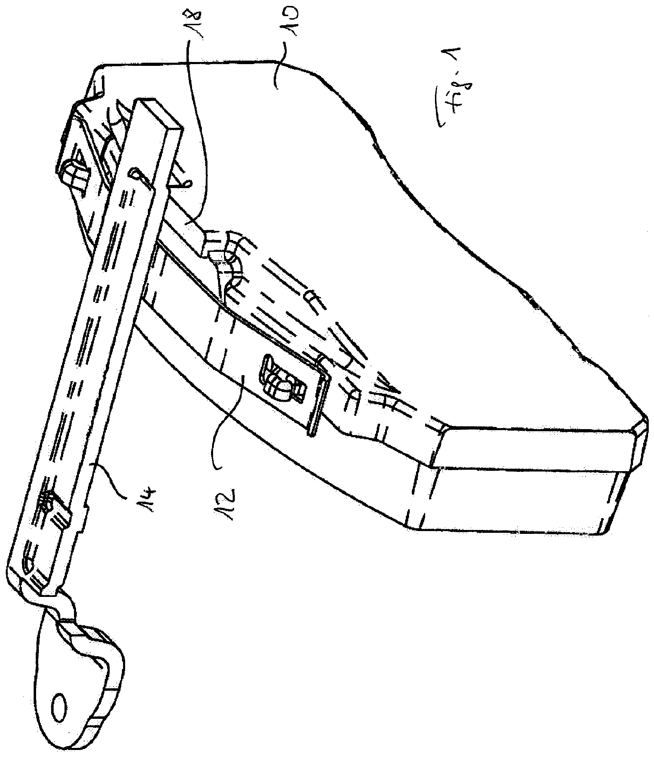

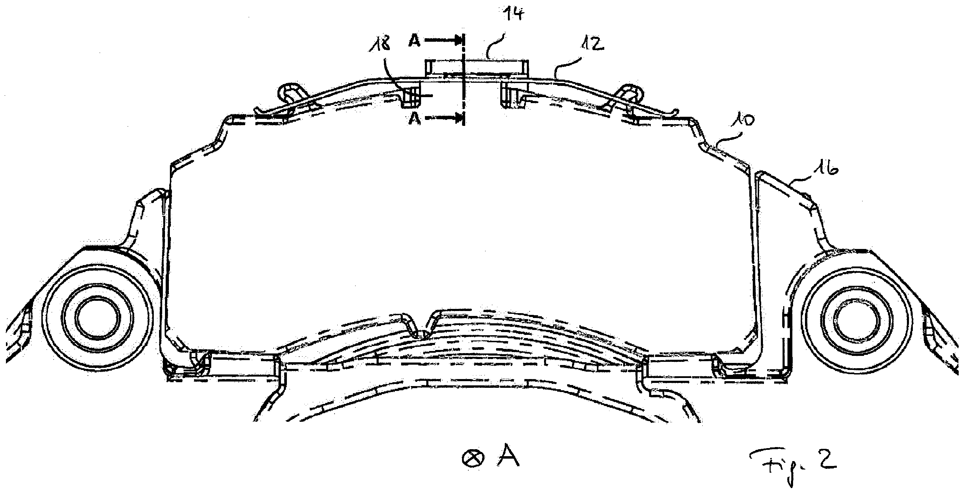

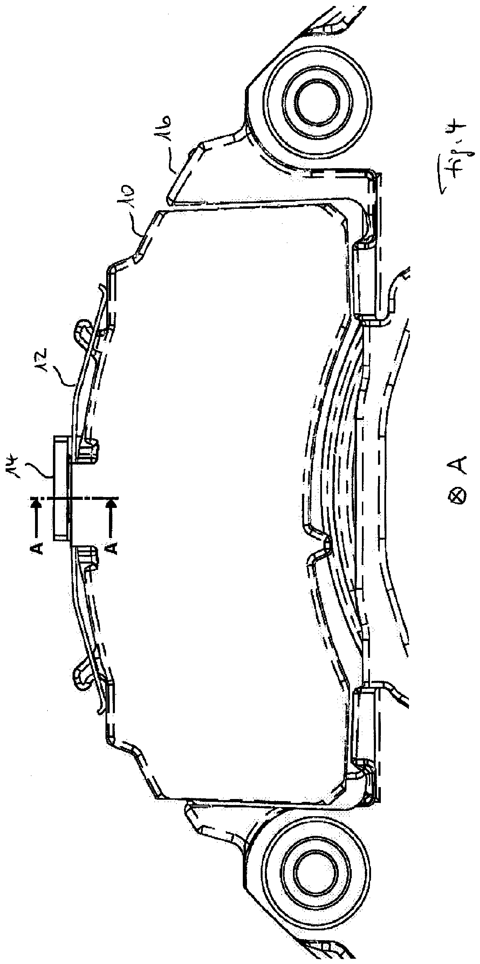

Die Figuren 1 bis 5 zeigen ein erstes Ausführungsbeispiel, mit einem Bremsbelag 10, einer Niederhaltefeder 12 und einem Niederhaltebügel 14, Wie den Figuren 2 und 4 zu entnehmen ist, ist bei dem in der Zeichnung dargestellten Ausführungsbeispiel der Bremsbelag 10 in einem Bremsenträger 16 einer Scheibenbremse gehalten. Die Drehachse der Bremse ist mit A bezeichnet. Der Bremsenträger 16 nimmt dabei den Bremsbelag 10 in einem Schacht auf, in dem der Bremsbelag 10 in Umfangsrichtung und nach radial innen abgestützt bzw. geführt ist. Der Bremsenträger 16 bildet insofern einen im Wesentlichen U-förmigen Schacht. Der Schacht ist nach radial außen offen. Mittels des Niederhaltebügels 14 wird der Bremsbelag 10 nach radial innen in den Schacht gedrückt. Zwischen dem Niederhaltebügel 14 und dem Bremsbelag 10 liegt dabei die Niederhaltefeder 12.

Durch diese Ausgestaltung kann sich der Bremsbelag 10 gegen die Rückstellkraft der Niederhaltefeder 12 nach radial außen bewegen.

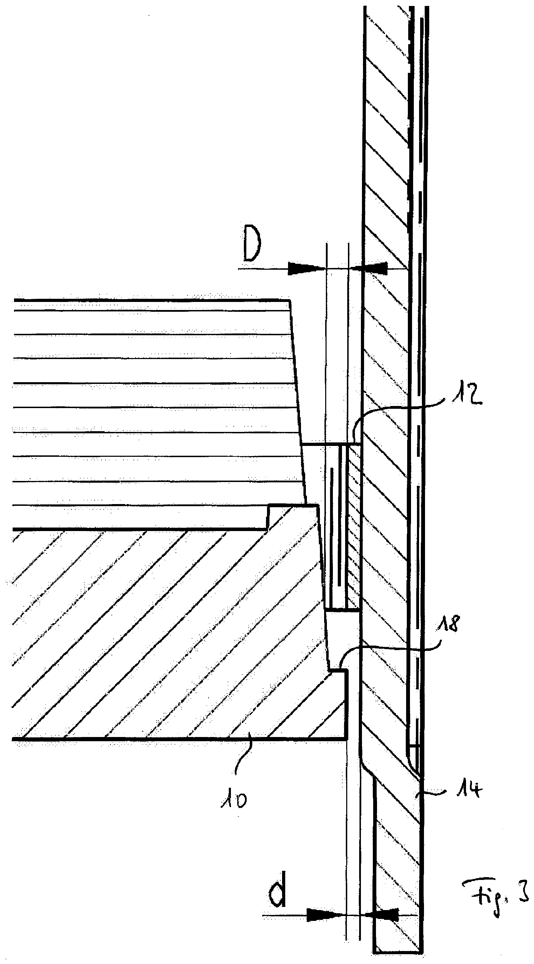

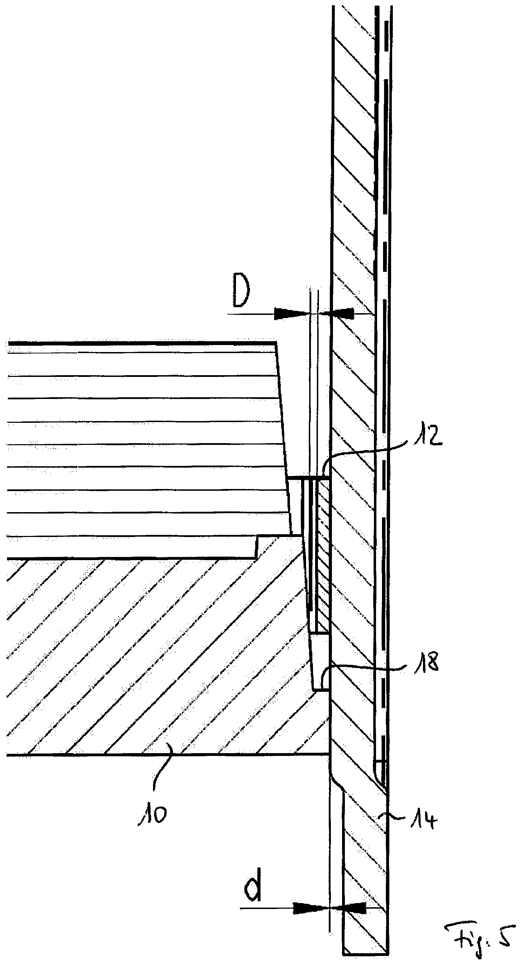

In den Figuren 3 und 5 ist der kleinste Radialabstand der Niederhaltefeder 12 von dem Bremsbelag 10 in demjenigen Bereich, in dem der Niederhaltebügel 14 die Niederhaltefeder 12 in Radialrichtung überdeckt, mit dem Bezugszeichen D bezeichnet.

Bei dem in den Figuren 1 bis 5 dargestellten Ausführungsbeispiel ist der Bremsbelag mit einem Ansatz 18 versehen, der in demjenigen Bereich angeordnet ist, in dem der Niederhaltebügel 14 den Bremsbelag 10 in Radialrichtung überdeckt. Der kleinste Radialabstand des Niederhaltebügels von dem Ansatz 18 und damit von dem Bremsbelag 10 ist mit dem Bezugszeichen d bezeichnet.

In dem in den Figuren 2 und 3 gezeigten Ruhezustand der Bremse beträgt der Abstand D 2 mm, wohingegen der Abstand d nur 1 mm beträgt.

Anders bei dem in den Figuren 4 und 5 gezeigten Betriebszustand: Hier ist nämlich der Bremsbelag 10 in Radialrichtung nach außen ausgelenkt, was beispielsweise auf Schlechtwegstrecken vorkommen kann. Der Abstand d ist in dem in den Figuren 4 und 5 dargestellten Betriebszustand Null. Mit anderen Worten schlägt der Ansatz 18 und damit der Bremsbelag 10 an dem Niederhaltebügel 14 an. Der Abstand D beträgt aber immer noch 1 mm. Der Bremsbelag 10 schlägt also nicht an der Niederhaltefeder 12 an. Dadurch ist insbesondere ein Einklemmen der Niederhaltefeder 12 zwischen dem Niederhaltebügel 14 und dem Bremsbelag 10 ausgeschlossen.

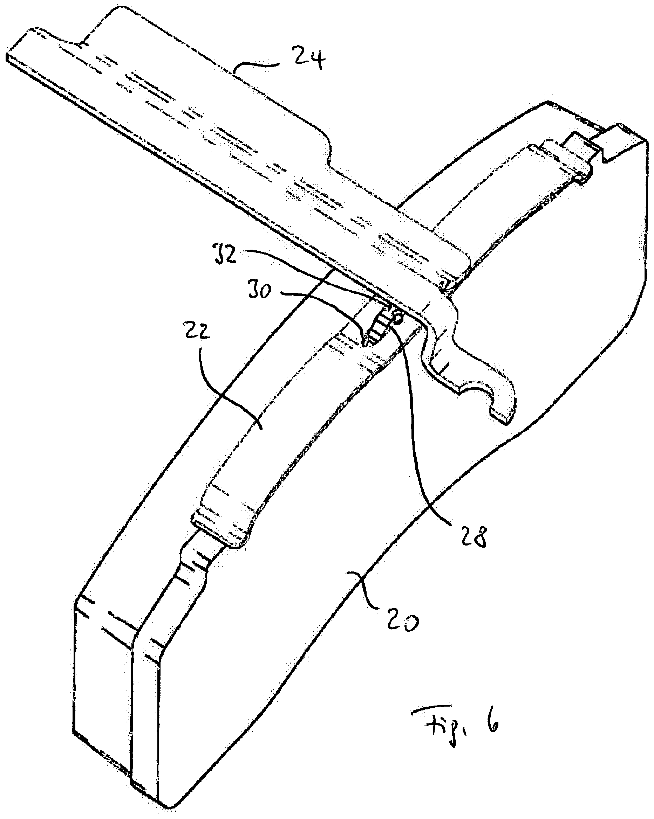

Wie Figur 1 zu entnehmen ist, liegt bei dem ersten Ausführungsbeispiel der Ansatz 18 in Axialrichtung hinter der Niederhaltefeder 12. Er erstreckt sich parallel dazu. Anders bei dem erfindungsgemäßen Ausführungsbeispiel nach den Figuren 6 bis 9.

Hier weist der gezeigte Bremsbelag 20 einen Ansatz 28 auf, der sich durch eine Durchgangsöffnung 30 in der Niederhaltefeder 22 erstreckt. Wegen seines Ansatzes 28 liegt der Bremsbelag 20 in Radialrichtung näher an dem Niederhaltebügel 24 als an der Niederhaltefeder 22. Mit anderen Worten ist der Radialabstand D wiederum kleiner als der Radialabstand d.

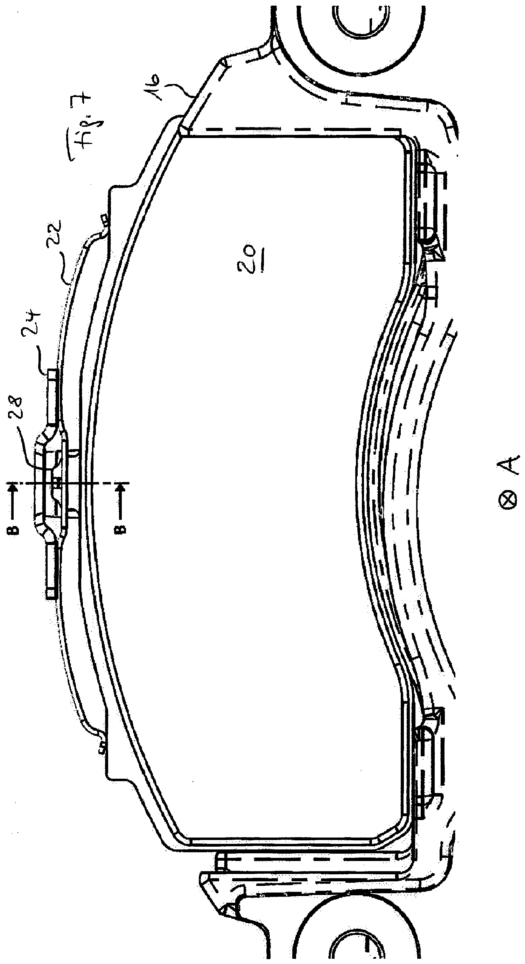

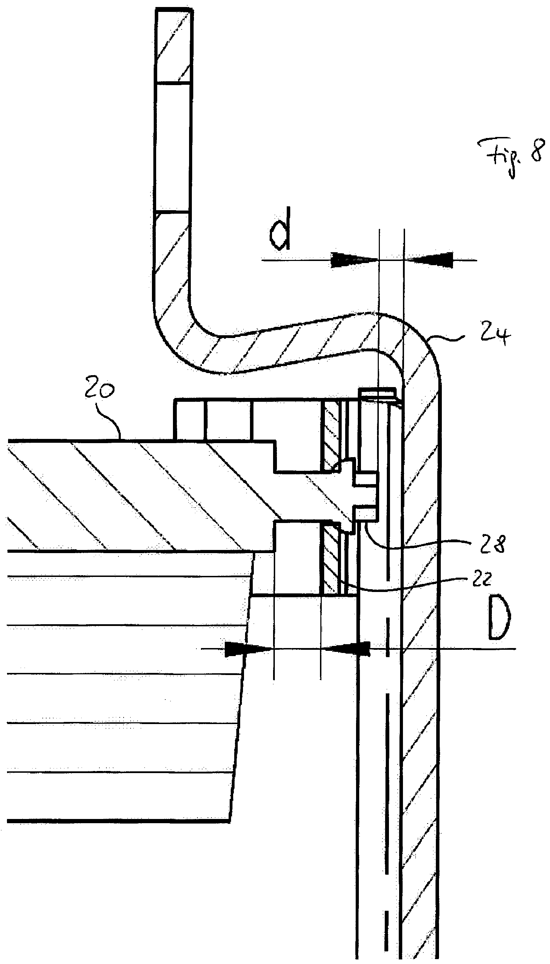

Die Figuren 7 und 8 zeigen das erfindungsgemäße zweite Ausführungsbeispiel im Ruhezustand entsprechend den sich auf das erste Ausführungsbeispiel beziehenden Figuren 2 und 3. Da der Radialabstand D größer als der Radialabstand d ist, wird bei einem Auslenken des Bremsbelags 20 nach radial außen, beispielsweise auf einer Schlechtwegstrecke, der Bremsbelag 20 mit seinem Ansatz 28 an dem Niederhaltebügel 24 anschlagen, bevor der Bremsbelag 20 die Niederhaltefeder 22 erreicht. Wiederum ist ein Einklemmen der Niederhaltefeder 22 zwischen dem Bremsbelag 20 und dem Niederhaltebügel 24 zuverlässig vermieden.

Der Ansatz 28 weist zwei Abkröpfungen auf, mit denen er die Niederhaltefeder 22 radial außen übergreift. Dadurch ist die Niederhaltefeder 22 an dem Bremsbelag 20 bzw. an dessen Ansatz 28 auch dann gesichert, wenn der Niederhaltebügel 24 abgenommen wird. Sie kann nicht nach radial außen wegspringen, was eine Gefährdung darstellen würde.

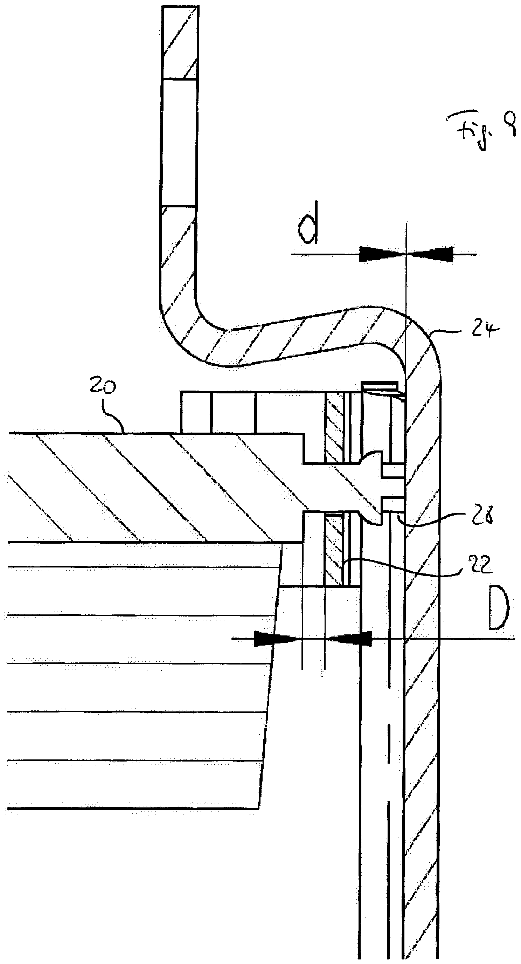

Figur 9 zeigt das erfindungsgemäße zweite Ausführungsbeispiel im ausgelenkten Zustand entsprechend der sich auf das erste Ausführungsbeispiel beziehenden Figur 5. Wiederum ist der Abstand d Null.

### Bezugszeichenliste

- 10: Bremsbelag
- 12: Niederhaltefeder
- 14: Niederhaltebügel
- 16: Bremsenträger
- 18: Ansatz
- 20: Bremsbelag
- 22: Niederhaltefeder
- 24: Niederhaltebügel
- 28: Ansatz
- 30: Durchgangsöffnung
- 32: Abkröpfung
- d: Radialabstand
- D: Radialabstand
- A: Bremsenachse

## Patentansprüche

1. Scheibenbremse, insbesondere für Nutzfahrzeuge, mit
einem Bremsbelag (10, 20),
einer Niederhaltefeder (12, 22) und
einem Niederhaltebügel (14, 24), wobei
der Niederhaltebügel die Niederhaltefeder nach radial innen bezüglich einer Drehachse (A) der Bremse gegen den Bremsbelag vorspannt,
der kleinste Radialabstand (D) der Niederhaltefeder (12, 22) von dem Bremsbelag (10, 20) in demjenigen Bereich, in dem der Niederhaltebügel (14, 24) die Niederhaltefeder in Radialrichtung überdeckt, größer ist als der kleinste Radialabstand (d) des Niederhaltebügels von dem Bremsbelag in demjenigen Bereich, in dem der Niederhaltebügel den Bremsbelag in Radialrichtung überdeckt,
wobei ein Ansatz (18, 28) vorgesehen ist, dessen radiale Begrenzung den kleinsten Radialabstand (d) des Niederhaltebüqels (14, 24) von dem Bremsbelag (10, 20) in demjenigen Bereich bestimmt, in dem der Niederhaltebügel den Bremsbelag in Radialrichtung überdeckt, und
**dadurch gekennzeichnet, dass** der Ansatz (18, 28) sich durch eine Durchgangsöffnung (30) in der Niederhaltefeder (12, 22) erstreckt.

2. Scheibenbremse nach Anspruch 1, **dadurch gekennzeichnet, dass** der kleinste Radialabstand (D) der Niederhaltefeder (12, 22) von dem Bremsbelag (10, 20) in demjenigen Bereich, in dem der Niederhaltebügel (14, 24) die Niederhaltefeder in Radialrichtung überdeckt, im Bereich von 1 ,5 bis 4 mm liegt, bevorzugt 2 bis 3 mm.

3. Scheibenbremse nach Anspruch 1 oder 2, **dadurch gekennzeichnet, dass** der kleinste Radialabstand (d) des Niederhaltebügels (14, 24) von dem Bremsbelag (10, 20) in demjenigen Bereich, in dem der Niederhaltebügel den Bremsbelag in Radialrichtung überdeckt, in dem Bereich von 1 bis 3,5 mm liegt, bevorzugt 1 ,5 bis 2,5 mm.

4. Scheibenbremse nach einem der vorangehenden Ansprüche, **dadurch gekennzeichnet, dass** im Ruhezustand der Bremse der Unterschied zwischen dem kleinsten Radialabstand (D) der Niederhaltefeder (12, 22) von dem Bremsbelag (10, 20) in demjenigen Bereich, in dem der Niederhaltebügel (14, 24) die Niederhaltefeder in Radialrichtung überdeckt, und dem kleinsten Radialabstand (d) des Niederhaltebügels von dem Bremsbelag in demjenigen Bereich, in dem der Niederhaltebügel den Bremsbelag in Radialrichtung überdeckt, im Bereich von 0,5 bis 2 mm liegt, bevorzugt 1 bis 1 ,5 mm.

5. Scheibenbremse nach einem der Ansprüche 1 bis 4, **dadurch gekennzeichnet, dass** der Ansatz (18, 28) an dem Bremsbelag (10) ausgebildet ist.

6. Scheibenbremse nach Anspruch 5, **dadurch gekennzeichnet, dass** der Ansatz (18, 28) die Niederhaltefeder (12, 22) übergreift.

7. Scheibenbremse nach einem der Ansprüche 1 bis 4, **dadurch gekennzeichnet, dass** der Ansatz an dem Niederhaltebügel ausgebildet ist.

## Claims

1. Disc brake, in particular for trucks, with
a brake pad (10, 20),
a retaining spring (12, 22) and
a retaining bracket (14, 24), wherein
the retaining bracket pretensions the retaining spring radially inwardly relative to a rotation axis (A) of the brake against the brake pad,
the smallest radial distance (D) of the retaining spring (12, 22) from the brake pad (10, 20) in the region in which the retaining bracket (14, 24) overlaps the retaining spring in the radial direction is greater than the smallest radial distance (d) of the retaining bracket from the brake pad in the region in which the retaining bracket overlaps the brake pad in the radial direction,
wherein a shoulder (18, 28) is provided, the radial delimitation of which determines the smallest radial distance (d) of the retaining bracket (14, 24) from the brake pad (10, 20) in the region in which the retaining bracket overlaps the brake pad in the radial direction, and
**characterized in that** the shoulder (18, 28) extends through a passage opening (30) in the retaining spring (12, 22).

2. Disc brake according to Claim 1, **characterized in that** the smallest radial distance (D) of the retaining spring (12, 22) from the brake pad (10, 20) in the region in which the retaining bracket (14, 24) overlaps the retaining spring in the radial direction lies in the range from 1.5 to 4 mm, preferably 2 to 3 mm.

3. Disc brake according to Claim 1 or 2, **characterized in that** the smallest radial distance (d) of the retaining bracket (14, 24) from the brake pad (10, 20) in the region in which the retaining bracket overlaps the brake pad in the radial direction lies in the range from 1 to 3.5 mm, preferably 1.5 to 2.5 mm.

4. Disc brake according to any of the preceding claims, **characterized in that** in the rest state of the brake, the difference between the smallest radial distance (D) of the retaining spring (12, 22) from the brake pad (10, 20) in the region in which the retaining bracket (14, 24) overlaps the retaining spring in the radial direction, and the smallest radial distance (d) of the retaining bracket from the brake pad in the region in which the retaining bracket overlaps the brake pad in the radial direction, lies in the range from 0.5 to 2 mm, preferably 1 to 1.5 mm.

5. Disc brake according to any of Claims 1 to 4, **characterized in that** the shoulder (18, 28) is formed on the brake pad (10).

6. Disc brake according to Claim 5, **characterized in that** the shoulder (18, 28) reaches over the retaining spring (12, 22).

7. Disc brake according to any of Claims 1 to 4, **characterized in that** the shoulder is formed on the retaining bracket.

## Revendications

1. Frein à disque, en particulier pour véhicules utilitaires, comportant
une garniture de frein (10, 20),
un ressort de maintien vers le bas (12, 22) et
un étrier de maintien vers le bas (14, 24), dans lequel l'étrier de maintien vers le bas exerce sur le ressort de maintien vers le bas une précontrainte radialement vers l'intérieur par rapport à un axe de rotation (A) du frein contre la garniture de frein,
la plus petite distance radiale (D) du ressort de maintien vers le bas (12, 22) à la garniture de frein (10, 20) dans la région dans laquelle l'étrier de maintien vers le bas (14, 24) recouvre le ressort de maintien vers le bas dans la direction radiale est supérieure à la plus petite distance radiale (d) de l'étrier de maintien vers le bas à la garniture de frein dans la région dans laquelle l'étrier de maintien vers le bas recouvre la garniture de frein dans la direction radiale,
un épaulement (18, 28) étant prévu, dont la limitation radiale détermine la plus petite distance radiale (d) de l'étrier de maintien vers le bas (14, 24) à la garniture de frein (10, 20) dans la région dans laquelle l'étrier de maintien vers le bas recouvre la garniture de frein dans la direction radiale, et
**caractérisé en ce que** l'épaulement (18, 28) s'étend à travers une ouverture de passage (30) dans le ressort de maintien vers le bas (12, 22).

2. Frein à disque selon la revendication 1, **caractérisé en ce que** la plus petite distance radiale (D) du ressort de maintien vers le bas (12, 22) à la garniture de frein (10, 20) dans la région dans laquelle l'étrier de maintien vers le bas (14, 24) recouvre le ressort de maintien vers le bas dans la direction radiale est de l'ordre de 1,5 à 4 mm, de préférence de 2 à 3 mm.

3. Frein à disque selon la revendication 1 ou 2, **caractérisé en ce que** la plus petite distance radiale (d) de l'étrier de maintien vers le bas (14, 24) à la garniture de frein (10, 20) dans la région dans laquelle l'étrier de maintien vers le bas recouvre la garniture de frein dans la direction radiale est de l'ordre de 1 à 3,5 mm, de préférence de 1,5 à 2,5 mm.

4. Frein à disque selon l'une quelconque des revendications précédentes, **caractérisé en ce qu'**à l'état de repos du frein, la différence entre la plus petite distance radiale (D) du ressort de maintien vers le bas (12, 22) à la garniture de frein (10, 20) dans la région dans laquelle l'étrier de maintien vers le bas (14, 24) recouvre le ressort de maintien vers le bas dans la direction radiale et la plus petite distance radiale (d) de l'étrier de maintien vers le bas à la garniture de frein dans la région dans laquelle l'étrier de maintien vers le bas recouvre la garniture de frein dans la direction radiale est de l'ordre de 0,5 à 2 mm, de préférence de 1 à 1,5 mm.

5. Frein à disque selon l'une quelconque des revendications 1 à 4, **caractérisé en ce que** l'épaulement (18, 28) est réalisé au niveau de la garniture de frein (10) .

6. Frein à disque selon la revendication 5, **caractérisé en ce que** l'épaulement (18, 28) vient en prise par le dessus avec le ressort de maintien vers le bas (12, 22).

7. Frein à disque selon l'une quelconque des revendications 1 à 4, **caractérisé en ce que** l'épaulement est réalisé au niveau de l'étrier de maintien vers le bas.
